# EUROPEAN PATENT APPLICATION

(11) **EP 2 050 423 A1**
(43) Date of publication of application: **22.04.2009**
(21) Application number: 07803632.4
(22) Date of filing: 16.07.2007
(51) Int. Cl.: A61G 5/04, A61G 5/10, B60B 35/10

(54) **WHEELCHAIR**

(71) Applicant: FUNDACION TEKNIKER, 20600 Eibar-Guipuzcoa (ES)
(72) Inventor: SAN MARTIN PALACIOS, Manex, E-20600 Eibar (guipuzcoa) (ES); OLARRA URBERUAGA, Aitor, E-20600 Eibar (guipuzcoa) (ES); EGAÑA FARIZO, Fernando, E-20600 Eibar (guipuzcoa) (ES)
(74) Representative: Carpintero Lopez, Francisco
(86) International application number: PCT/ES2007/000432
(87) International publication number: WO 2009/010597

(57) **Abstract**

The wheelchair comprises driving wheels (1) and steerable wheels (2), at least one motor (3) associated to the rear wheels such that it can move the driving wheels (1) laterally, modifying the distance between the driving wheels (1), and at least one control device (4) configured to allow controlling the operation of the motor (3), such that a user sitting on the wheelchair can selectively increase or reduce the distance between the driving wheels (1).

## Description

### Technical Field of the Invention

The invention is comprised in the field of wheelchairs useful for transporting, for example, disabled people.

### Background of the Invention

The use of wheelchairs is known for the movement of people who are disabled and/or have problems preventing them from walking. These chairs usually comprise a frame provided with at least three, normally four wheels, arranged on a front shaft and a rear shaft. A seat and backrest for the person are assembled on the frame. Many of these chairs are motor-driven, i.e., they include one or more motors acting on the driving wheels (normally, the rear wheels), making them rotate according to instructions which the user transmits by means of some type of actuator, normally a lever or buttons located in an easily accessible place, for example, in correspondence with the armrest of the chair. On the other hand, it usually has two loose or steerable wheels, which are usually the front wheels. These steerable wheels can be steerable by means of any external mechanical or electromechanical control system, or mere "loose wheels" or "self-steerable" wheels which are orientated automatically according to the movement of the wheelchair, as is conventional (for example, loose wheels rotating about horizontal shafts associated to respective vertical shafts allowing the rotation or pivoting of the corresponding wheel about said vertical shaft, depending on changes in the direction of movement of the wheelchair).

Logically, it is important for the chair to be stable, which implies that its centre of gravity must be located quite close to the ground and that the distance between the points of support on the ground, i.e., the distance between the wheels, must be as large as possible. On the other hand, a large distance between the wheels can be a problem when the chair has to move in narrow or reduced spaces, for example, inside a house or the like.

There is therefore a certain conflict between, on the one hand, the stability requirement (which requires a large distance between the points of support of the chair on the ground), and the need for the chair to also be able to move in restricted spaces, for example, indoors. Indoors it can be useful for the chair to have reduced dimensions, both in width and in length, to achieve a good manoeuvrability, whereas for its use outdoors it can be useful for the chair to have a good stability against tipping over and for its use at relatively high speeds, for which it is convenient for the distance between the wheels to be as large as possible and likewise for the distance between the front shaft (normally, that of the loose or steerable wheels) and the rear shaft (normally, that of the driving wheels) to be as large as possible.

The use of chairs allowing manual regulation of the distance between elements such as wheels or shafts, for example, by means of bars or structures having a series of regulation holes into which a bolt or screw is introduced, such that depending on the position of the hole, the final dimensions of the chair vary, is known. Examples of this type of chair are described in WO-A-03/045299, WO-A-2006/012699, WO-A-2004/016210, US-A-2006/0138835, WO-A-92/08636, US-A-5020816, EP-A-1413278 and DE-U-29901471.

This type of regulation is not used to change the dimensions of the chair during its use, for example, when it is used to go out into the street or when it is used to enter a closed place. It refers rather to regulations which are carried out the first day of use to adapt the chair to the configuration of the user (generally to his or her height and weight) or to a continued use to which the chair is going to be put (for example, in the case of a chair which is going to be used in a hospital and which, in principle, is not going to be used outdoors).

### Description of the Invention

The invention relates to a wheelchair comprising: at least two drive or driving wheels (for example, the rear wheels) of the chair, which can be driven by one or several motors which serve for the movement of the chair); and
at least two loose or steerable wheels (for example, the front wheels; as has been indicated above, the term "steerable wheels" is understood to refer to both wheels which can be orientated by means of any control mechanism and the classic "loose wheels" which are orientated according to the movement of the chair).

According to the invention, the wheelchair further comprises:
at least one motor associated to the driving wheels such that it can move the driving wheels laterally, modifying the distance between the driving wheels, and
at least one control device (for example, a lever, buttons, or other elements, optionally including a suitable electronic control) located accessibly for a person sitting on the wheelchair (for example, in correspondence with an armrest or the like). The control device is configured to allow controlling the operation of the motor or of the motors, such that a user sitting on the wheelchair can selectively increase or reduce the distance between the driving wheels, acting on the control device.

The wheelchair can further comprise an elongated element arranged in the longitudinal direction of the wheelchair, the motor being coupled to said elongated element such that it can move it in a first direction and in a second direction opposite to the first direction (for example, rotating the element clockwise or anti-clockwise, or moving it forwards and backwards, in the longitudinal direction of the wheelchair; in this context, the longitudinal direction of the wheelchair is understood to refer to that corresponding to the forwards or backwards direction for the person sitting on the wheelchair, i.e., basically, the direction perpendicular to the shaft between the driving wheels of the chair, which is usually extended in the transverse direction of the wheelchair).

The elongated element can be associated to two or more connecting rods, each associated to one of the driving wheels, such that the movement of said elongated element in one direction causes, through said connecting rods, an increase in the distance between the driving wheels, and such that the movement of said elongated element in an opposite direction involves a reduction in the distance between the driving wheels.

Each of said connecting rods can be connected to the elongated element by means of a first pivoting link and to a support structure of the corresponding driving wheel by means of a second pivoting link, such that the angular position of each of the connecting rods with respect to the elongated element and with respect to the driving wheels is modified when said elongated element moves, for example, by rotating.

The elongated element can be a threaded screw, each of said connecting rods being associated to said threaded screw by means of at least one nut assembled on the threaded screw and to which an end of the connecting rod is coupled, such that upon rotating said threaded screw the nut moves longitudinally along the screw, moving the ends of the connecting rods forwards or backwards, depending on whether the screw moves rotating in the first direction or in the second direction.

Alternatively, the wheelchair can comprise an elongated fixed element arranged in the longitudinal direction of the wheelchair, said at least one motor being coupled to a mobile device meshing with the elongated fixed element such that it can move in a first direction and in a second direction opposite to the first direction, along the elongated element.

The mobile device can, as in the case described above, be associated to at least two connecting rods, one of said connecting rods being associated to one of the driving wheels and another one of said connecting rods being associated to another one of the driving wheels, such that the movement of said mobile device in one direction causes, through said connecting rods, an increase in the distance between the driving wheels, and such that the movement of said mobile device in the opposite direction involves a reduction in the distance between the driving wheels. Each of said connecting rods can be connected to said mobile device by means of a first link and to a support structure of the corresponding driving wheel by means of a second link, said first link being a pivoting link and said second link being a pivoting link, such that the angular position of each of the connecting rods with respect to the elongated element and with respect to the driving wheels is modified when said mobile device moves along the elongated element.

The elongated element can be a threaded screw, and each of said connecting rods can be associated to said threaded screw by means of said mobile device, said mobile device comprising at least one nut assembled on the threaded screw and to which an end of the connecting rod is coupled, such that upon rotating said nut driven by the corresponding motor, the nut moves longitudinally along the screw, moving the ends of the connecting rods forwards or backwards, depending on whether the nut moves rotating in one direction or in the opposite direction.

Alternatively, the elongated element can be a bar or notched element, and the mobile device can comprise at least one pinion or the like configured to move longitudinally along the notched element when the pinion rotates driven by the corresponding motor, due to the interaction between the pinion and a notched area of said elongated element. Each of the connecting rods can be coupled pivotably to the mobile device.

In other words, basically, as an alternative to the first modality described, the nut blocking the rotation of the screw can be made to rotate with the motor, moving the ends of the connecting rods forwards or backwards, depending on whether the said nut rotates in the first direction or in the second direction. In this case, the motor is associated to the nut. Basically, the configuration of the system could be virtually identical to the configuration in which the screw rotates, but simply leaving the screw fixed and having the motor associated to the nut such that the motor can make it rotate in one direction or in another.

According to another alternative described, the connecting rods can be associated to a pinion or the like associated to a motor making it rotate, such that it can move along an elongated notched fixed element. This configuration could be identical to that of the fixed screw, simply replacing the screw with an elongated notched element and the nut with a pinion meshing with the teeth of the elongated notched element.

The driving wheels can be coupled to a transverse shaft of the wheelchair, such that they can move transversely by means of sliding. For example, each driving wheel can be coupled to said transverse shaft by means of an arm connected to a bushing coupled to said transverse shaft such that it can move axially along a section of said transverse shaft.

The transverse shaft can be provided with a plurality of longitudinal channels or grooves extending along the transverse shaft, and the bushings can have an internal configuration complementary to the cross-section of the transverse shaft, such that they can slide axially along said transverse shaft but not rotate about said transverse shaft.

A vertical movement of the driving wheel is converted through the arms linking it to the transverse shaft into a rotation thereof, which must be restricted by the chassis. This restriction of the rotation can be carried out rigidly or by means of a system of at least two elastic elements (for example, springs) (with or without shock absorber) linking a part of a chassis or frame of the wheelchair to the transverse shaft, such that the compression and expansion of said elastic elements angularly restrict the transverse shaft, i.e., they oppose the rotation of the transverse shaft about its longitudinal shaft.

The chair can further comprise motor-driven means to move at least two wheels selectively forwards and backwards. For example, at least two of said wheels moveable forwards and backwards can each be associated to a telescopic structure comprising at least one first telescopic element axially moveable with respect to a second telescopic element. Telescopic element is understood in this context to be an element which can carry out an axial movement with respect to another element, such that an assembly of elements can be elongated in its axial direction by means of the sliding of an element with respect to the other.

Each of said at least two wheels can be coupled pivotably to the corresponding first telescopic element. Each first telescopic element can be moveable with respect to the second telescopic element by longitudinal movement, driven by a motor, of a mobile element associated to each first telescopic element by means of at least one connecting rod. The mobile element can be, for example, moveable by interaction with a threaded screw driven by a motor.

Alternatively, each first telescopic element can be moveable with respect to the second telescopic element by rotational movement, driven by a motor, of a rotating element (for example, a pinion or the like) associated to the corresponding first telescopic element by means of at least two connecting rods articulated to one another.

Said at least two telescopic structures can be substantially parallel to one another, such that an axial movement of the first telescopic elements with respect to the second telescopic elements involves a forwards or backwards movement of the corresponding wheels.

Alternatively, said at least two telescopic structures can form an angle substantially larger than 0º to one another (for example, an angle between 20º and 160º degrees, for example, an angle between 40º and 80º), such that a movement of the first telescopic elements with respect to the second telescopic elements involves a forwards or backwards movement of the corresponding wheels, and furthermore a movement in the lateral direction of the corresponding wheels, such that the distance between said wheels increases or is reduced, respectively.

Said at least two wheels, selectively moveable forwards and backwards, can include (or consist of) the two loose or steerable wheels of the chair (for example, the front wheels).

One and the same motor can be arranged to move the driving wheels in the lateral direction and the loose or steerable wheels forwards and backwards, but it is also possible that a motor is arranged to move the driving wheels in the lateral direction and another motor can be arranged to move the loose or steerable wheels forwards and backwards (and, where appropriate, laterally).

At least two wheels can be arranged to be moved by a motor in the diagonal direction, such that they move simultaneously in the longitudinal direction and in the transverse direction with respect to the chair. Said at least two wheels configured to be moved by a motor in the diagonal direction can be coupled to a chassis of the chair by means of a telescopic structure, in line with what has been suggested above. Said wheels arranged to be moved by a motor in the diagonal direction can be the loose or steerable wheels.

At least two wheels can be moveable in the transverse direction and/or in the longitudinal direction of the chair, by means of a transmission mechanism driven by a motor, said transmission mechanism comprising at least one threaded screw and at least one nut moveable along the screw.

### Description of the Drawings

To complement the description being made and for the purpose of aiding to better understand the features of the invention according to preferred practical embodiments thereof, a set of drawings is attached as an integral part of the description, in which the following has been depicted with an illustrative and non-limiting character:
Figures 1 and 2 show a plan view of a part of the wheelchair according to a possible embodiment of the invention, with the wheels retracted and unfolded, respectively.
Figures 3 and 4 show a perspective view of a wheelchair according to a possible embodiment of the invention, with the wheels retracted and unfolded, respectively.
Figures 5 and 6 show two plan views of a detail of the movement transmission system, according to a possible embodiment of the invention.
Figures 7 and 8 show two views, one a perspective view and the other one a side view, of a detail of the shock-absorbing system.

### Preferred Embodiments of the Invention

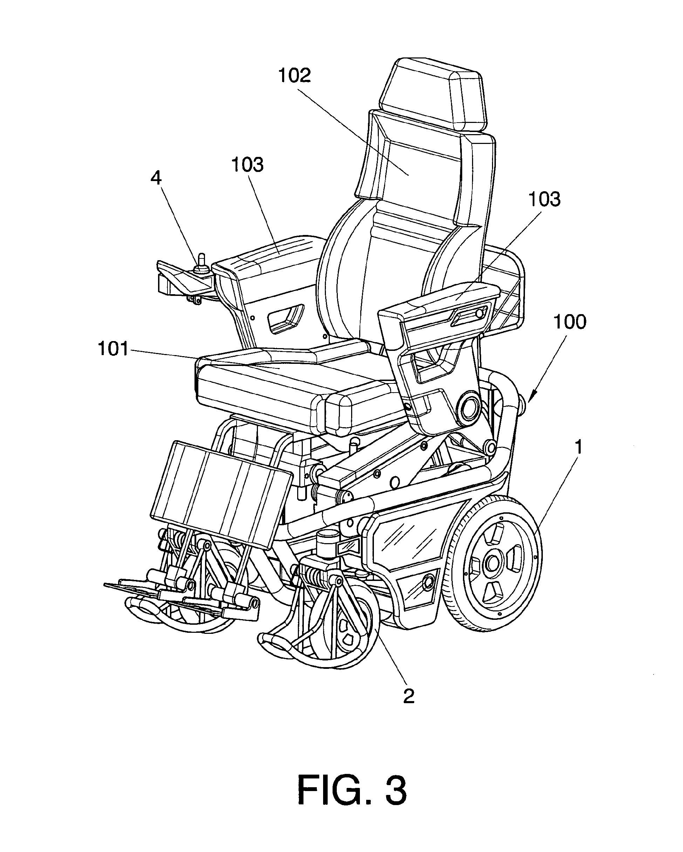

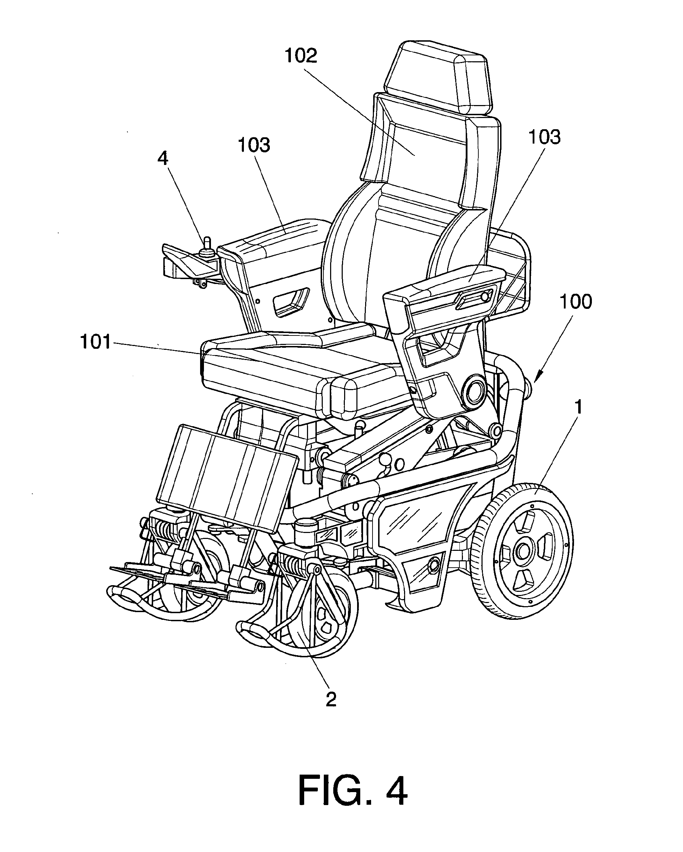

Figures 3 and 4 show a perspective view of a wheelchair according to a possible embodiment of the invention. As is conventional, it includes a chassis or frame 100 on which a seat 101, a backrest 102 and two armrests 103 are assembled. In correspondence with one of the armrests there is assembled a control device 4 allowing the user to control the general driving of the wheelchair (by means of one or more motors associated to the driving wheels, which in this case make up the rear wheels of the chair) and, furthermore, to control the position in the lateral direction (i.e., in the transverse direction with respect to the longitudinal shaft of the chair, this longitudinal shaft being the shaft in the horizontal plane going from back to front) of the driving wheels, and in a forwards/backwards direction (i.e., the longitudinal direction) of the loose or steerable wheels (and, optionally, also in the lateral direction of the loose or steerable wheels, as will be explained below). Figure 3 shows the wheelchair with the wheels "folded", i.e., with the loose or steerable wheels in their retracted position (i.e., maximally retracted backwards) and with the driving wheels maximally retracted in the transverse direction (i.e., with a minimum distance between the driving wheels). Figure 4 shows the wheelchair with the loose or steerable wheels in their most advanced position and with the driving wheels unfolded, i.e., with a larger or maximum distance between the driving wheels. The position of the wheels in Figure 3 can be advantageous for driving the chair indoors (for example, inside a building) and the "most stable" position of Figure 4 can be advantageous for driving outdoors and/or on uneven terrain.

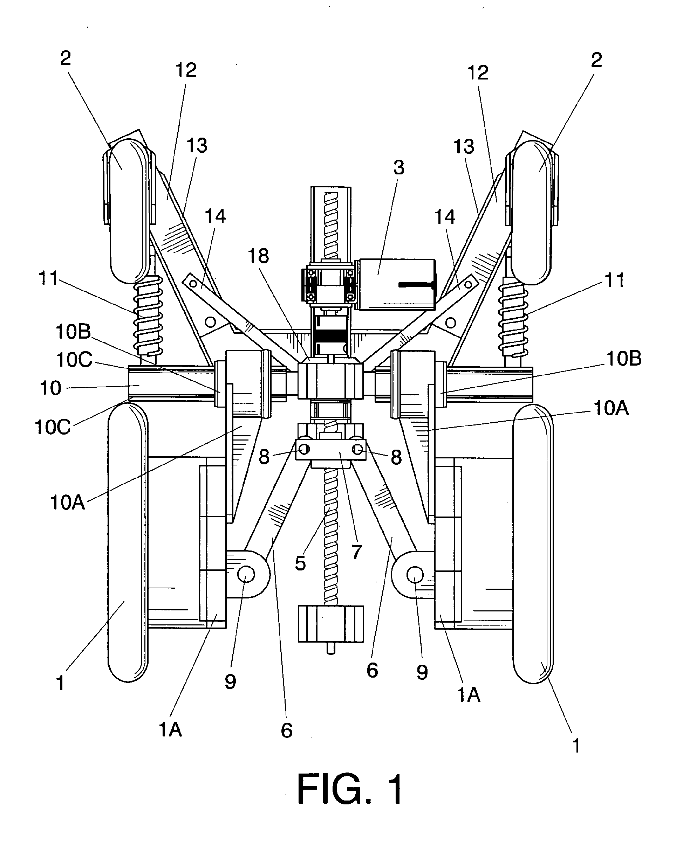

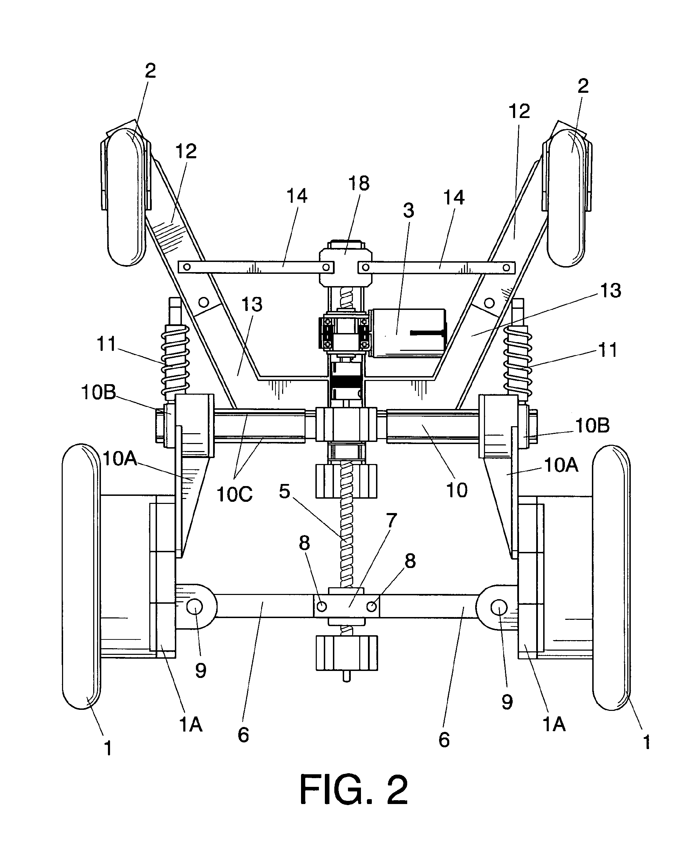

Figures 1 and 2 illustrate a series of components of the wheelchair according to a possible embodiment of the invention, in which the lateral/transverse movement of the rear wheels 1 and, optionally, the longitudinal (forwards and backwards) and (optionally) lateral movement of the front wheels 2 is carried out from a motor 3 which, by means of a transmission mechanism, makes a threaded screw 5 rotate selectively in one direction or in another, according to the control signals that the motor receives from the user through the control device 4 (see Figures 3 and 4).

On the screw 5 there is threaded a nut 7 moving longitudinally along a section of the screw, in a direction depending on the rotation direction of the screw. The nut is coupled, by means of respective hinged or pivoting links 8, to the ends of two connecting rods 6 the other ends of which are linked, by means of respective hinged or pivoting links 9, to the support structures 1 A of the respective driving wheels 1. On the other hand, each driving wheel is furthermore linked to the chassis or frame of the wheelchair by means of an arm 10A coupled to a transverse shaft 10 of the wheelchair by means of a bushing 10B. The transverse shaft 10 is provided with grooves, slots or channels 10C which extend along the shaft, and the bushings 10B have an internal configuration corresponding to the cross-section of the transverse shaft 10, whereby the bushings 10B can move along sections of the transverse shaft 10, but not rotate about said shaft.

The chair further incorporates a suspension system for suspending the driving wheels comprising two springs (with or without shock absorber) 11 (or another type of elastic element) linking a part of the chassis of the chair to the transverse shaft 10, such that the compression (and expansion) of said springs angularly restrict the transverse shaft 10 on which the arms 10A are assembled, which arms are in turn rigidly connected to the support structures 1 A of the rear wheels 1, as can be seen in Figures 1 and 2.

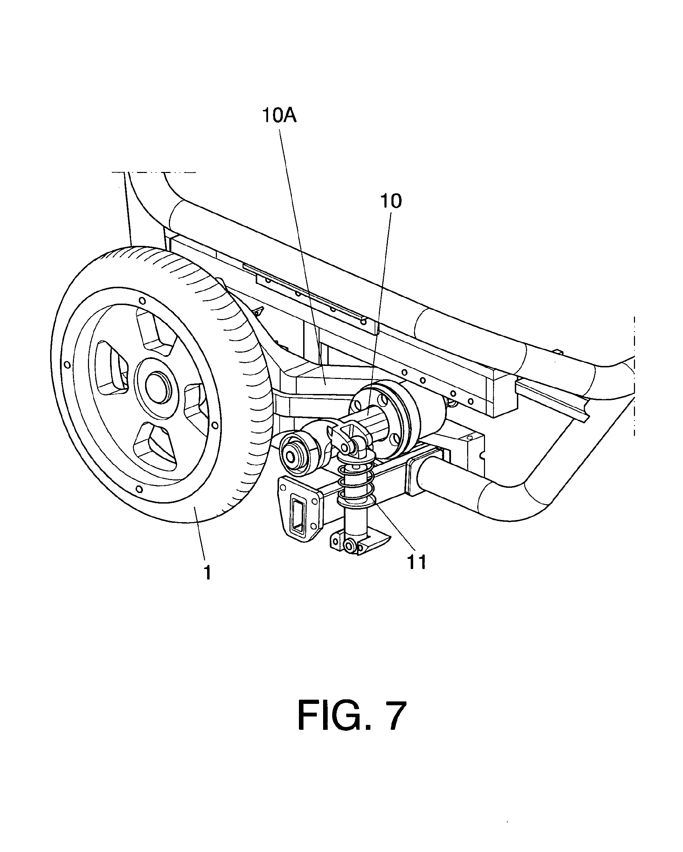

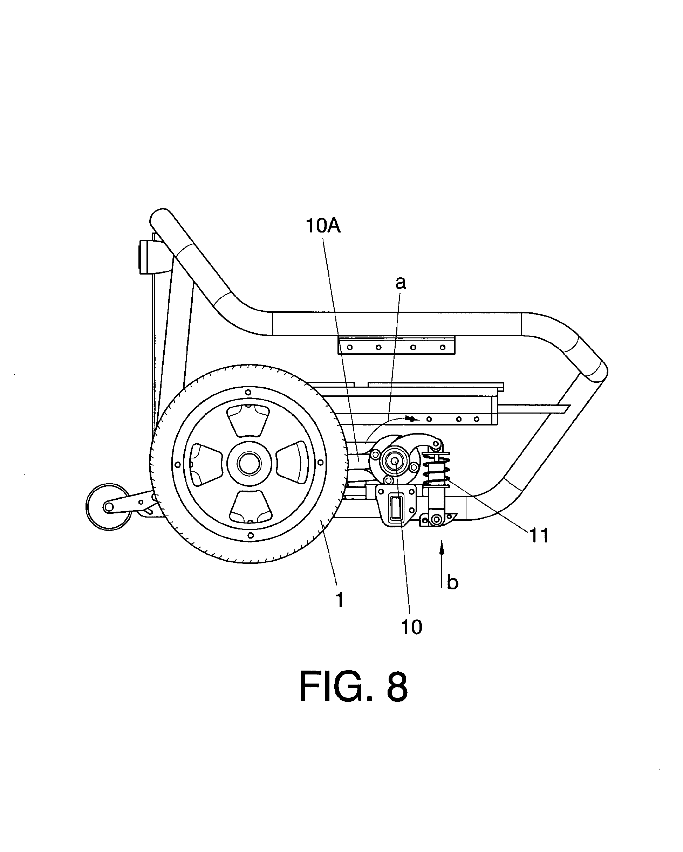

Therefore, a vertical movement of the driving wheels is converted through the arms 10A linking them to the transverse shaft into a rotation of this transverse shaft 10, which must be restricted by the chassis. This restriction of the rotation can be carried out rigidly or, as is seen in Figures 1 and 2 and, in more detail, in Figures 7 and 8, by means of the system comprising the two springs 11 (with or without shock absorber) linking a part of the chassis or frame of the wheelchair to the transverse shaft 10, such that the compression of said springs 11 angularly restricts the transverse shaft, i.e., the springs limit or block or oppose said rotation. In Figure 8, arrow "a" shows a torque induced to the shaft 10 by a vertical movement of the wheel 1, and arrow "b" indicates the force exerted by the spring 11 to oppose said torque and prevent an excessive rotation of the shaft 10.

As can be seen in Figures 1 and 2, upon rotating the screw 5 the nut 7 moves along the screw. During this movement, the nut 7 moves, through the connecting rods 6, the driving wheels 1 outwards or inwards in a lateral or transverse direction, according to the rotation direction of the screw 5. The driving wheels 1, pressed outwards or attracted inwards through the connecting rods, move laterally with the bushings 10B, sliding along the transverse shaft 10.

Thus, by acting on the motor 3 from the control device 4, the user can adapt the distance between the driving wheels 1 according to what is considered suitable at each moment, for example, to improve the manoeuvrability or stability of the wheelchair.

According to an alternative embodiment of the invention, the screw 5 can be fixed and the motor 3 can be associated to the nut 7, making it rotate in one direction or in another such that it moves forwards or backwards along the screw. According to another alternative embodiment of the invention, there can be a notched element instead of the screw, the nut being replaced with a pinion which the motor makes rotate in one direction or in another, such that it moves forwards or backwards. It has not been considered necessary to illustrate these alternatives.

On the other hand, the loose wheels 2 are assembled (pivotably about a vertical shaft) in respective arms 12 which are arranged telescopically, i.e., such that they can move axially, in channels or guides 13 forming part of the chassis or frame of the wheelchair. The relative axial position between the arms 12 and the guides 13 determines the position of the loose wheels with respect to the chassis of the wheelchair. If the guides and the arms extend in a parallel manner, i.e., they extend axially in the longitudinal direction of the chair, the position of the loose wheels can be varied in the longitudinal direction, i.e., forwards or backwards, whereby the distance between the front shaft (normally, that of the "loose wheels") and the rear shaft (normally, that of the "driving wheels") of the wheelchair can be modified.

However, in Figures 1 and 2, one of the telescopic arm 12+guide 13 assemblies form an angle on the order of 50 degrees with respect to the other telescopic assembly 12+13, i.e., one of the assemblies extends diagonally towards one side of the wheelchair, and the other one towards the other side. Thus, as is understood from Figures 1 and 2, the axial movement of the arms 12 with respect to the guides 13 moves the corresponding loose wheel 2 both in the longitudinal direction (forwards or backwards) and in the lateral/transverse direction, therefore this movement determines both the distance between the loose wheels and the distance between the shaft of the front wheels and the shaft of the rear wheels, in the longitudinal direction of the wheelchair.

The arms 12 are linked to a mobile element 18 through connecting rods 14, such that the position of the mobile element 18 determines the position of the loose or steerable wheels. This mobile element can be moved in the longitudinal direction by the threaded screw 5, by another threaded screw (driven by the motor 3 or by another motor, not shown), or by any other suitable mechanism.

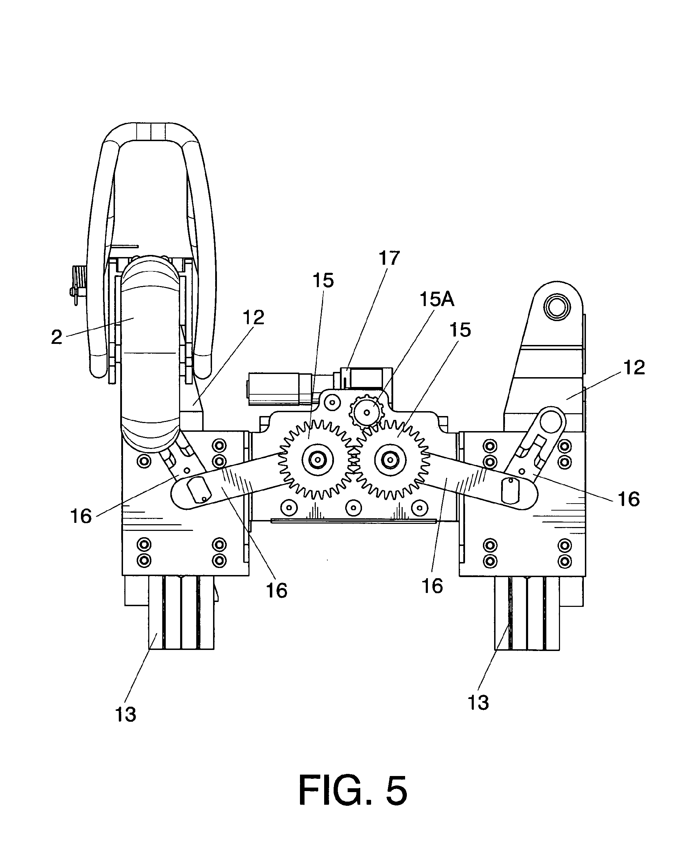

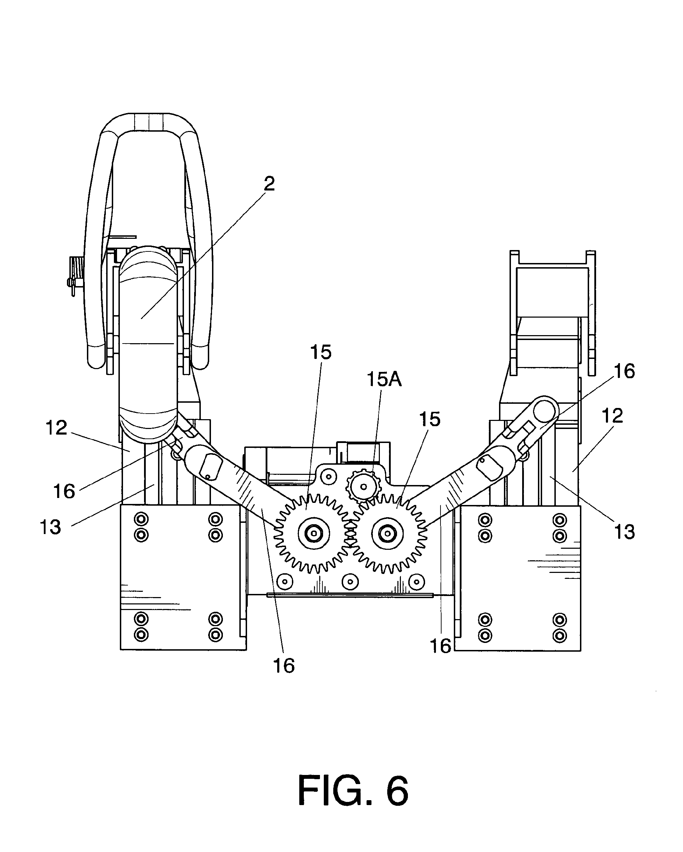

Figures 5 and 6 show another possible configuration of the longitudinal movement system of the loose wheels 2, in which each arm 13 is linked to a pinion 15 by means of a pair of connecting rods, therefore upon rotating the respective pinion 15 (for example, by the interaction of a pinion 15A linked to the shaft of the corresponding motor), each arm 12 slides longitudinally with respect to the corresponding guide 13. In this case (that of Figures 5 and 6), the telescopic assemblies 12+13 are located in a parallel manner, which implies that the loose wheels 2 only move forwards or backwards, i.e., in the longitudinal direction, and not laterally, therefore the distance between both loose wheels 2 is maintained constant.

In this text, the word "comprise" and its variants (such as "comprising", etc.) must not be interpreted exclusively, i.e., they do not exclude the possibility that what is described includes other elements, steps, etc.

On the other hand, the invention is not limited to the specific embodiments which have been described but rather it also covers, for example, the variants which can be carried out by a person skilled in the art (for example, with regard to the choice of materials, dimensions, components, configuration, etc.), within what is inferred from the claims.

## Claims

1. Wheelchair, comprising:
at least two driving wheels (1); and
at least two steerable wheels (2);
**characterised in that**
it further comprises
at least one motor (3) associated to the driving wheels such that it can move the driving wheels (1) laterally, modifying the distance between the driving wheels (1), and
at least one control device (4) located accessibly for a person sitting on the wheelchair, the control device being configured to allow controlling the operation of said at least one motor (3), such that a user sitting on the wheelchair can selectively increase or reduce the distance between the driving wheels (1), acting on the control device (4).

2. Wheelchair according to claim 1, further comprising an elongated element (5) arranged in the longitudinal direction of the wheelchair, said at least one motor (3) being coupled to said elongated element (5) such that it can move it in a first direction and in a second direction opposite to the first direction.

3. Wheelchair according to claim 2, wherein said elongated element (5) is associated to at least two connecting rods (6), one of said connecting rods being associated to one of the driving wheels (1) and another one of said connecting rods (6) being associated to another one of the driving wheels (1), such that the movement of said elongated element (5) in one direction causes, through said connecting rods, an increase in the distance between the driving wheels (1), and such that the movement of said elongated element (5) in the opposite direction involves a reduction in the distance between the driving wheels (1).

4. Wheelchair according to claim 3, wherein each of said connecting rods (6) is connected to said elongated element (5) by means of a first link (8) and to a support structure (1A) of the corresponding driving wheel (1) by means of a second link (9), said first link being a pivoting link and said second link being a pivoting link, such that the angular position of each of the connecting rods (6) with respect to the elongated element (5) and with respect to the driving wheels (1) is modified when said elongated element moves.

5. Wheelchair according to any of claims 2-4, wherein said elongated element (5) is a threaded screw, each of said connecting rods (6) being associated to said threaded screw by means of at least one nut (7) assembled on the threaded screw and to which an end of the connecting rod (6) is coupled, such that upon rotating said threaded screw the nut (7) moves longitudinally along the screw, moving the ends of the connecting rods forwards or backwards, depending on whether said elongated element moves rotating in the first direction or in the second direction.

6. Wheelchair according to claim 1, further comprising an elongated fixed element arranged in the longitudinal direction of the wheelchair, said at least one motor being coupled to a mobile device meshing with the elongated fixed element such that it can move in a first direction and in a second direction opposite to the first direction, along the elongated element.

7. Wheelchair according to claim 6, wherein said mobile device is associated to at least two connecting rods, one of said connecting rods being associated to one of the driving wheels and another one of said connecting rods being associated to another one of the driving wheels, such that the movement of said mobile device in one direction causes, through said connecting rods, an increase in the distance between the driving wheels, and such that the movement of said mobile device in the opposite direction involves a reduction in the distance between the driving wheels.

8. Wheelchair according to claim 7, wherein each of said connecting rods is connected to said mobile device by means of a first link and to a support structure of the corresponding driving wheel by means of a second link, said first link being a pivoting link and said second link being a pivoting link, such that the angular position of each of the connecting rods with respect to the elongated element and with respect to the driving wheels is modified when said mobile device moves along the elongated element.

9. Wheelchair according to any of claims 6-8, wherein said elongated element is a threaded screw, each of said connecting rods being associated to said threaded screw by means of said mobile device, said mobile device comprising at least one nut assembled on the threaded screw and to which an end of each connecting rod is coupled, such that upon rotating said nut driven by the corresponding motor, the nut moves longitudinally along the screw, moving the ends of the connecting rods forwards or backwards, depending on whether the nut moves rotating in one direction or in the opposite direction.

10. Wheelchair according to any of claims 6-8, wherein said elongated element is a notched element and wherein said mobile device comprises at least one pinion configured to move longitudinally along the notched element driven by the motor, by interaction between the pinion and a notched area of said elongated element, each of said connecting rods being coupled pivotably to said mobile device.

11. Wheelchair according to any of the previous claims, wherein the driving wheels (1) are coupled to a transverse shaft (10) of the wheelchair, such that they can move transversely by means of sliding.

12. Wheelchair according to claim 11, wherein each driving wheel (1) is coupled to said transverse shaft (10) by means of to arm (10A) connected to a bushing (10B) coupled to said transverse shaft (10) such that it can move axially along a section of said transverse shaft (10).

13. Wheelchair according to claim 12, additionally comprising at least two elastic elements (11) linking a part of a chassis of the chair to the transverse shaft (10), such that the compression of said elastic elements angularly restricts the transverse shaft (10), said arms (10A) being connected to the transverse shaft such that upon modifying the angular position of the transverse shaft the arms rotate with respect to the corresponding shaft.

14. Wheelchair according to claim 13, wherein the transverse shaft (10) is provided with a plurality of longitudinal channels (10C), and wherein said bushings (10B) have an internal configuration complementary to the cross-section of the transverse shaft, such that they can slide axially along said transverse shaft (10) but not rotate about said transverse shaft (10).

15. Wheelchair according to any of the previous claims, **characterised in that** it comprises motor-driven means to move at least two wheels (2) selectively forwards and backwards.

16. Wheelchair according to claim 15, wherein at least two of said wheels (2) moveable forwards and backwards are each associated to a telescopic structure comprising at least one first telescopic element (12) axially moveable with respect to a second telescopic element (13).

17. Wheelchair according to claim 16, wherein each of said at least two wheels (2) moveable forwards and backwards is coupled pivotably to the corresponding first telescopic element (12).

18. Wheelchair according to claim 17, wherein each first telescopic element (12) is moveable with respect to the second telescopic element (13) by longitudinal movement, driven by a motor, of a mobile element (18) associated to each first telescopic element (12) by means of at least one connecting rod (14).

19. Wheelchair according to claim 18, wherein said mobile element (18) is moveable by interaction with a threaded screw (5) driven by a motor.

20. Wheelchair according to claim 17, wherein each first telescopic element (12) is moveable with respect to the second telescopic element (13) by rotational movement, driven by a motor, of a rotating element (15) associated to the corresponding first telescopic element (12) by means of at least two connecting rods (16) articulated to one another.

21. Wheelchair according to claim 20, wherein said rotating element (15) is a pinion.

22. Wheelchair according to any of claims 16-21, wherein said at least two telescopic structures (12, 13) are substantially parallel to one another, such that an axial movement of the first telescopic elements (12) with respect to the second telescopic elements (13) involves a forwards or backwards movement of the corresponding wheels (2).

23. Wheelchair according to any of claims 16-21, wherein said at least two telescopic structures (12, 13) form an angle substantially larger than 0º to one another, such that a movement of the first telescopic elements (12) with respect to the second telescopic elements (13) involves a forwards or backwards movement of the corresponding wheels (2), and furthermore a movement in the lateral direction of the corresponding wheels, such that the distance between said wheels (2) increases or is reduced, respectively.

24. Wheelchair according claim 23, wherein said angle is between 20º and 160º.

25. Wheelchair according to claim 24, wherein said angle is between 40º and 80º.

26. Wheelchair according to any of claims 15-25, wherein said at least two wheels (2) selectively moveable forwards and backwards include two steerable wheels (2) of the chair.

27. Wheelchair according to claim 26, wherein one and the same motor (3) is arranged to move the driving wheels in the lateral direction and the steerable wheels forwards and backwards.

28. Wheelchair according to claim 26, wherein a motor (3) is arranged to move the driving wheels in the lateral direction and another motor (17) is arranged to move the steerable wheels forwards and backwards.

29. Wheelchair according to any of claims 1-21 and 23-25 , wherein at least two wheels (2) are arranged to be moved by a motor in the diagonal direction, such that they move simultaneously in the longitudinal direction and in the transverse direction with respect to the chair.

30. Wheelchair according to claim 29, wherein said at least two wheels (2) configured to be moved by a motor in the diagonal direction are coupled to a chassis of the chair by means of a telescopic structure (12, 13).

31. Wheelchair according to any of claims 29 and 30, wherein said wheels (2) arranged to be moved by a motor in the diagonal direction are the steerable wheels (2).

32. Wheelchair according to any of the previous claims, wherein at least two wheels are moveable in the transverse direction and/or in the longitudinal direction of the chair, by means of a transmission mechanism driven by a motor, said transmission mechanism comprising at least one threaded screw and at least one nut moveable along the screw.

33. Wheelchair according to any of the previous claims, wherein the driving wheels (1) are rear wheels of the wheelchair, and wherein the steerable wheels (2) are front wheels of the wheelchair.
